# FASCICULE DE BREVET EUROPEEN

(11) **EP 2 214 375 B1**
(45) Date de publication et mention de la délivrance du brevet: **30.07.2014**
(21) Numéro de dépôt: 10151551.8
(22) Date de dépôt: 25.01.2010
(51) Int. Cl.: H04L 29/06, H04W 36/14

(54) **Procédé de contrôle de communications de voix en l'absence de coeur de réseau de type ims, et agent d'interfonctionnement associé**
Kontrollverfahren von Sprachkommunikationsvorgängen in Abwesenheit einer Basiseinheit eines Netzes vom Typ IMS, und entsprechende Interworking-Unit
Method for controlling voice communications in the absence of an IMS core network, and associated interoperation agent

(30) Priorité: 30.01.2009 FR 0950585
(43) Date de publication de la demande: 04.08.2010
(73) Titulaire: Alcatel Lucent, 92100 Boulogne-Billancourt (FR)
(72) Inventeur: Orlandi, Barbara, 91620, NOZAY (FR); Mongazon-Cazatavet, Bruno, 91620, NOZAY (FR)
(74) Mandataire: El Manouni, Josiane

(56) Documents cités:
- WO-A-2006/105223
- WO-A-2006/138736
- WO-A-2007/124306
- WO-A-2008/002997
- "3rd Generation Partnership Project; Technical Specification Group Services and System Aspects; Voice Call Continuity (VCC) between Circuit Switched (CS) and IP Multimedia Subsystem (IMS); Stage 2 (Release 7); 3GPP TS 23.206" ETSI STANDARDS, LIS, SOPHIA ANTIPOLIS CEDEX, FRANCE, vol. 3-SA2, no. V7.2.0, 1 mars 2007 (2007-03-01), XP014036823 ISSN: 0000-0001
- "Digital cellular telecommunications system (Phase 2+); Universal Mobile Telecommunications System (UMTS); Customized Applications for Mobile network Enhanced Logic (CAMEL); Service description; Stage 1 (3GPP TS 22.078 version 7.6.0 Release 7); ETSI TS 122 078" ETSI STANDARDS, LIS, SOPHIA ANTIPOLIS CEDEX, FRANCE, vol. 3-SA1, no. V7.6.0, 1 décembre 2005 (2005-12-01), XP014032401 ISSN: 0000-0001

## Description

L'invention concerne les équipements de communication radio qui comprennent au moins deux interfaces de communication radio leur permettant d'établir des communications avec au moins un premier réseau radio, disposant d'un coeur supportant un protocole Internet (ou IP) mais différent d'un coeur de type IMS (« IP Multimedia Subsystem »), et un second réseau radio, disposant d'un coeur dit à commutation de circuits (ou CS pour « Circuit Switched »).

On entend ici par « équipement de communication radio » tout type d'équipement ou terminal capable d'établir des communications sans fil avec un autre équipement de communication (éventuellement un équipement de réseau) via au moins des premier et second réseaux radio tels que définis ci-avant. Par conséquent, il pourra s'agir d'un ordinateur portable, d'un téléphone mobile ou cellulaire, ou d'un assistant personnel numérique (ou PDA) équipé d'un module de communication radio, éventuellement de type « smartphone », par exemple.

Comme le sait l'homme de l'art, les équipements de communication radio précités ont été conçus de manière à tirer partie de la diversité qui peut exister dans certaines zones en matière de réseau d'accès radio, et notamment dans le but d'assurer une continuité de session de communication vocale en cas de déplacement et/ou de modification des conditions radio locales.

Lorsqu'un réseau mobile (ou cellulaire ou radio) est pourvu d'un coeur de réseau de type IMS couplé à au moins deux réseaux d'accès radio de types différents (dont un de type IP), la continuité d'une session de voix, impliquant un équipement de communication radio connecté à l'un de ces réseaux d'accès radio, peut être assurée par un mécanisme appelé « continuité d'appel vocal » (ou VCC pour « Voice Call Continuity ») et défini par la spécification technique 3GPP TS 23.206. Cependant, pour qu'un tel mécanisme VCC puisse fonctionner, il faut que l'opérateur puisse utiliser ce que l'on appelle des déclencheurs de type CAMEL (ou « CAMEL triggers » - programmes déclenchant des actions spécifiques) pour chacun de ses clients. Or, lorsque l'opérateur est de type MVNO (« Mobile Virtual Network Operator » - opérateur de réseau mobile virtuel), comme par exemple un fournisseur de service Internet disposant d'un réseau de type WiMAX et ayant passé des accords de partenariat avec un opérateur de réseau mobile (3GPP), il ne dispose pas toujours d'un accès aux déclencheurs de type CAMEL ou bien il ne peut pas accéder aux données d'usagers qui sont stockées dans la base de données HLR (« Home Location Register ») du réseau mobile partenaire, et donc l'opérateur est dans l'incapacité d'assurer la continuité des sessions de voix sur IP (ou VolP (« Voice over IP »)) pour ses clients.

Par ailleurs, lorsque l'opérateur d'un réseau radio à protocole IP ne dispose pas de coeur de réseau de type IMS, il est également dans l'incapacité d'assurer la continuité des sessions de voix sur IP pour ses clients, y compris lorsque son réseau radio à protocole IP est couplé à un réseau mobile partenaire.

L'invention a donc pour but d'améliorer la situation en l'absence d'un coeur de réseau IMS, lorsqu'une continuité de session de voix est requise (CS vers IP ou IP vers CS) et lors de l'établissement d'une communication de voix via un réseau radio à protocole IP.

Elle propose à cet effet un procédé dédié au contrôle de communications vocales concernant un équipement de communication radio propre à se connecter au moins à un premier réseau radio disposant d'un coeur supportant un protocole Internet et à un second réseau radio disposant d'un coeur à commutation de circuits (ou CS).

Ce procédé de contrôle se caractérise par le fait qu'il consiste :
i) lorsqu'un équipement de communication distant veut établir une communication vocale avec un équipement de communication radio, à utiliser un premier identifiant de communication associé à ce dernier et comportant un préfixe désignant un agent d'interfonctionnement qui est implanté dans le premier réseau radio, puis à déterminer avec cet agent d'interfonctionnement le réseau radio auquel est connecté l'équipement de communication radio et via lequel il peut être joint par un second identifiant de communication (éventuellement identique au premier), afin d'établir une communication avec lui via son second identifiant de communication puis d'établir une interconnexion entre les équipement de communication distant et équipement de communication radio, et
ii) lorsqu'un équipement de communication radio veut établir une communication vocale avec un équipement de communication distant, à établir une communication avec l'agent d'interfonctionnement afin de lui fournir un identifiant de communication d'un équipement de communication distant pour qu'il établisse une communication avec ce dernier via son identifiant de communication puis qu'il établisse une interconnexion entre les équipement de communication radio et équipement de communication distant.

Le procédé selon l'invention peut comporter d'autres caractéristiques qui peuvent être prises séparément ou en combinaison, et notamment :
- en cas de déplacement de l'équipement de communication radio, pendant une communication vocale avec l'équipement de communication distant via le premier réseau radio, nécessitant un transfert vers le second réseau radio, l'équipement de communication radio peut établir une communication avec l'agent d'interfonctionnement via le second réseau radio, afin qu'il mette à jour l'interconnexion existante entre les équipement de communication radio et équipement de communication distant via ledit second réseau radio et qu'il supprime la portion de communication via le premier réseau radio ;
- en cas de déplacement de l'équipement de communication radio, pendant une communication vocale avec l'équipement de communication distant via le second réseau radio, nécessitant un transfert vers le premier réseau radio, l'équipement de communication radio peut établir une communication avec l'agent d'interfonctionnement via le premier réseau radio, afin qu'il mette à jour l'interconnexion existante entre les équipement de communication radio et équipement de communication distant via le premier réseau radio et qu'il supprime la portion de communication via le second réseau radio.

L'invention propose également un agent d'interfonctionnement (ou « interworking agent ») destiné à faire partie d'un premier réseau radio disposant d'un coeur supportant un protocole Internet et auquel peuvent se connecter des équipements de communication radio pouvant également se connecter à au moins un second réseau radio disposant d'un coeur à commutation de circuits (ou CS).

Cet agent d'interfonctionnement se caractérise par le fait qu'il est agencé :
i) lorsqu'il reçoit d'un équipement de communication distant une demande d'établissement de communication vocale avec un équipement de communication radio désigné par un premier identifiant de communication comportant un préfixe désignant également l'agent d'interfonctionnement, pour déterminer le réseau radio auquel est connecté cet équipement de communication radio et via lequel il peut être joint par un second identifiant de communication (éventuellement identique au premier), puis pour établir une communication avec cet équipement de communication radio via son second identifiant de communication, et pour établir une interconnexion entre les équipement de communication distant et équipement de communication radio, et
ii) lorsqu'il reçoit d'un équipement de communication radio une demande d'établissement de communication vocale comportant un identifiant de communication désignant un équipement de communication distant avec lequel cet équipement de communication radio veut établir une communication vocale, pour établir une communication avec l'équipement de communication distant via son identifiant de communication, puis pour établir une interconnexion entre les équipement de communication radio et équipement de communication distant.

L'agent d'interfonctionnement selon l'invention peut comporter d'autres caractéristiques qui peuvent être prises séparément ou en combinaison, et notamment :
- il peut être agencé, en cas de réception en provenance d'un équipement de communication radio d'une autre demande d'établissement de communication via le second réseau radio alors que cet équipement de communication radio est déjà en communication vocale avec un équipement de communication distant via le premier réseau radio, pour interpréter cette autre demande comme une demande de transfert vers le second réseau radio, puis pour mettre à jour l'interconnexion entre les équipement de communication radio et équipement de communication distant via le second réseau radio, et pour supprimer la portion de communication via le premier réseau radio ;
- il peut être agencé, en cas de réception en provenance d'un équipement de communication radio d'une autre demande d'établissement de communication via le premier réseau radio alors que cet équipement de communication radio est déjà en communication vocale avec un équipement de communication distant via le second réseau radio, pour interpréter cette autre demande comme une demande de transfert vers le premier réseau radio, puis pour mettre à jour l'interconnexion entre les équipement de communication radio et équipement de communication distant via le premier réseau radio, et pour supprimer la portion de communication via le second réseau radio.

L'invention propose également un équipement de réseau équipé d'un agent d'interfonctionnement du type de celui présenté ci-avant, et constituant, par exemple, un serveur de type SIP (« Session Initiation Protocol »).

L'invention est particulièrement bien adaptée, bien que de façon non exclusive, aux situations dans lesquelles le premier réseau radio (à coeur supportant un protocole Internet) est choisi parmi (au moins) un réseau de type WiMAX, un réseau de type LTE (« Long Term Evolution »), un réseau de type HSPA, et un réseau de type WLAN (« Wireless Local Area Network » - réseau local sans fil), et le second réseau radio (à coeur CS) est choisi parmi (au moins) un réseau mobile de type GSM, un réseau mobile de type UMTS, un réseau mobile de type HSPA, un réseau mobile de type CDMA 2000 et un réseau mobile de type LTE.

D'autres caractéristiques et avantages de l'invention apparaîtront à l'examen de la description détaillée ci-après, et des dessins annexés, sur lesquels :

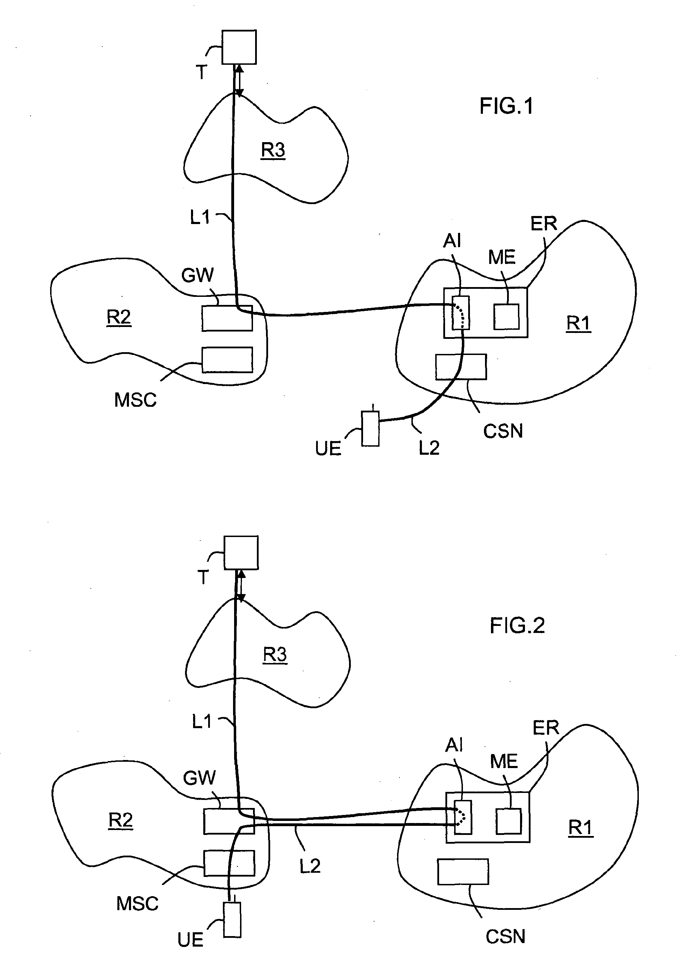

- la figure 1 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'un appel entrant destiné à un téléphone mobile connecté au premier réseau radio et issu d'un téléphone fixe connecté au troisième réseau distant,
- la figure 2 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'un appel entrant destiné à un téléphone mobile connecté au second réseau radio et issu d'un téléphone fixe connecté au troisième réseau distant,

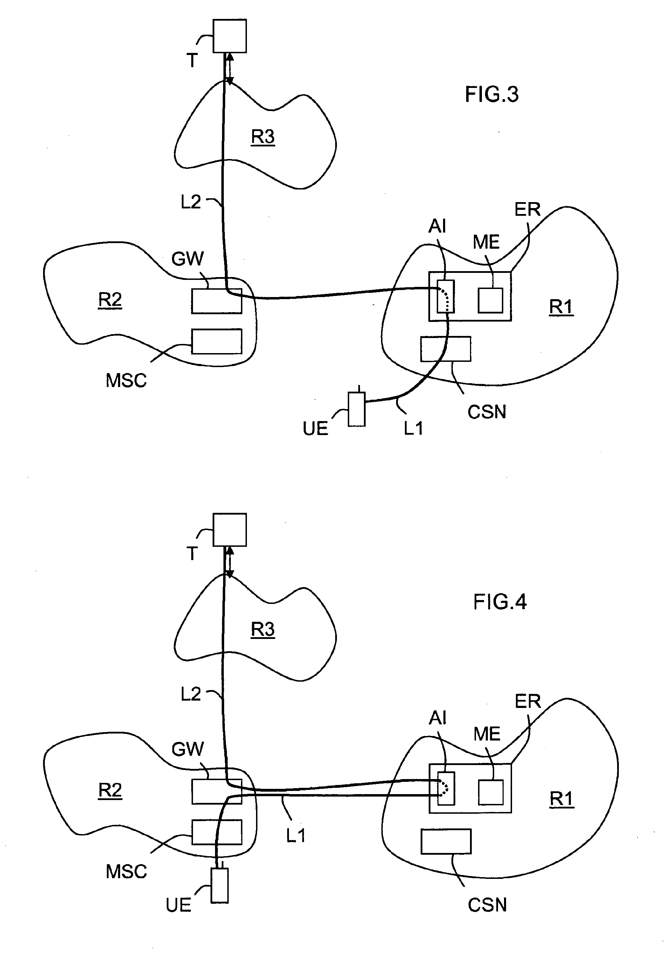

- la figure 3 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'un appel sortant destiné à un téléphone fixe connecté au troisième réseau distant et issu d'un téléphone mobile connecté au premier réseau radio,
- la figure 4 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'un appel sortant destiné à un téléphone fixe connecté au troisième réseau distant et issu d'un téléphone mobile connecté au second réseau radio,

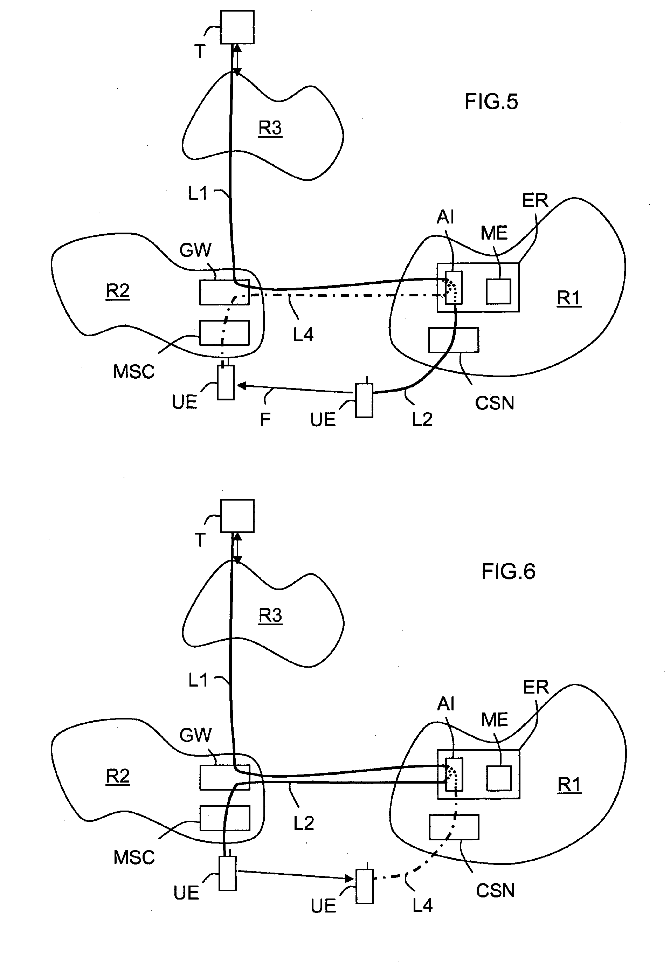

- la figure 5 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'une communication établie entre un téléphone mobile connecté au premier réseau radio et un téléphone fixe connecté au troisième réseau distant via le premier réseau radio, puis d'un transfert de cette communication via le second réseau radio consécutivement au déplacement du téléphone mobile, et
- la figure 6 illustre de façon très schématique et fonctionnelle un premier réseau radio à protocole IP équipé d'un agent d'interfonctionnement selon l'invention, et couplé à un second réseau radio, lui-même couplé à un troisième réseau distant, en présence d'une communication établie entre un téléphone mobile connecté au second réseau radio et un téléphone fixe connecté au troisième réseau distant via le second réseau radio, puis d'un transfert de cette communication via le premier réseau radio consécutivement au déplacement du téléphone mobile.
   Les dessins annexés pourront non seulement servir à compléter l'invention, mais aussi contribuer à sa définition, le cas échéant.
   L'invention a pour objet de permettre à des équipements de communication radio, propres à se connecter au moins à un premier réseau (R1), disposant d'un coeur supportant un protocole Internet (ou IP) mais différent d'un coeur de type IMS, et à un second réseau radio (R2), disposant d'un coeur à commutation de circuits (ou CS), d'établir des communications vocales sur IP avec des équipements de communication distants connectés à un troisième réseau (R3), et inversement, en l'absence de coeur de réseau de type IMS. On notera que les premier (R1) et second (R2) réseaux radio ne sont pas forcément connectés l'un à l'autre. Ils peuvent en effet être simplement couplés entre eux via au moins un autre réseau de communication, qui n'est pas obligatoirement le troisième réseau (R3).
   Dans ce qui suit, on considère à titre d'exemple non limitatif que le premier réseau radio (à protocole IP) (R1) est un réseau de type WiMAX. Mais, l'invention n'est pas limitée à ce type de premier réseau radio à protocole IP. Elle concerne en effet tous les réseaux de communication radio disposant d'un coeur (ou « core network ») supportant un protocole IP (tel que TCP/IP), et notamment les réseaux de type LTE (« Long Term Evolution »), les réseaux de type HSPA, et les réseaux locaux sans fil ou WLAN (« Wireless Local Area Network »).
   Par ailleurs, on considère dans ce qui suit, à titre d'exemple non limitatif, que le second réseau radio (à coeur CS) (R2) est un réseau mobile (ou cellulaire) de type GSM. Mais, l'invention n'est pas limitée à ce type de second réseau radio. Elle concerne en effet tous les réseaux de communication de type PLMN (« Public Land Mobile Network » - réseau radio de téléphonie terrestre) dont l'infrastructure supporte la voix sur circuits, et notamment les réseaux mobiles de type UMTS (et donc disposant d'un réseau d'accès radio de type UTRAN), les réseaux mobiles de type HSPA (et donc disposant d'un réseau d'accès radio de type E-UTRAN (« Evolved-UTRAN »)), les réseaux mobiles de type CDMA 2000 et les réseaux mobiles de type LTE.
   En outre, on considère dans ce qui suit, à titre d'exemple non limitatif, que le troisième réseau (R3) est un réseau téléphonique commuté public (ou PSTN) de type ADSL. Mais, l'invention n'est pas limitée à ce type de troisième réseau. Elle concerne en effet tous les types de réseau de communication supportant ou non la voix sur IP, qu'ils soient de type PSTN ou PLMN.
   L'invention propose de mettre en oeuvre un procédé de contrôle des communications vocales impliquant des équipements de communication radio (UE), au sein d'un système de communication comportant un premier réseau radio à protocole Internet (R1), tel que défini ci-avant et couplé à au moins un second réseau radio à coeur CS (R2) tel que défini ci-avant, et couplé (directement ou indirectement) à un troisième réseau (R3), tel que défini ci-avant, en l'absence de coeur de réseau de type IMS.
   Un tel système de communication est très schématiquement illustré sur les figures 1 à 6.
   Il est important de noter que l'on entend ici par « équipement de communication radio » tout type d'équipement ou terminal capable d'établir des communications sans fil avec un autre équipement de communication (éventuellement un équipement de réseau) via au moins deux réseaux radio de types différents (dont un à protocole Internet). Par conséquent, il pourra s'agir d'un ordinateur portable, d'un téléphone mobile ou cellulaire, ou d'un assistant personnel numérique (ou PDA) équipé d'un module de communication radio, éventuellement de type « smartphone », par exemple. Dans ce qui suit on considère à titre d'exemple illustratif que les équipements de communication radio UE sont des téléphones mobiles (ou cellulaires) disposant d'interfaces de communication leur permettant de se connecter au moins au premier réseau radio R1 et au second réseau radio R2.
   Il est également important de noter que la mise en oeuvre de l'invention nécessite l'implantation dans le premier réseau radio R1, et plus précisément dans son coeur (ou « core network »), d'un agent d'interfonctionnement (ou « interworking agent ») Al d'un nouveau genre.
   Dans l'exemple non limitatif illustré sur les figures 1 à 6, l'agent d'interfonctionnement AI selon l'invention est implanté dans un équipement de réseau ER qui constitue un serveur de type SIP (« Session Initiation Protocol »
- protocole d'initiation de session de communication), muni classiquement d'un module d'enregistrement (ou « registrar ») ME pour enregistrer les identifiants des équipements de communication radio UE qui sont connectés à son premier réseau radio R1. En d'autres termes, le module d'enregistrement ME et l'agent d'interfonctionnement AI sont ici préférentiellement colocalisés pour une raison que l'on expliquera plus loin. Mais cela n'est pas obligatoire, l'important étant en effet que l'agent d'interfonctionnement AI puisse communiquer avec le serveur SIP ER, et en particulier avec son module d'enregistrement ME.

L'agent d'interfonctionnement AI selon l'invention est préférentiellement réalisé sous la forme de modules logiciels (ou informatiques). Mais, il peut être également réalisé sous la forme de circuits électroniques ou d'une combinaison de circuits électroniques et de modules logiciels.

Le procédé (de contrôle) selon l'invention comprend des première et seconde parties.

La première partie est dédiée aux communications vocales qui sont dites entrantes du fait qu'elles sont issues d'équipements de communication distants T (connectés au troisième réseau R3), comme par exemple des ordinateurs fixes, et concernent des équipements de communication radio UE (ici des téléphones mobiles), connectés au premier R1 ou second R2 réseau radio.

La seconde partie est dédiée aux communications vocales qui sont dites sortantes du fait qu'elles sont issues d'équipements de communication radio UE (ici des téléphones mobiles), connectés au premier R1 ou second R2 réseau radio, et concernent des équipements de communication distants T (connectés au troisième réseau R3), comme par exemple des ordinateurs fixes.

La première partie du procédé est donc mise en oeuvre chaque fois qu'un équipement de communication distant T (ici un ordinateur fixe), connecté au troisième réseau R3, veut établir une communication vocale avec un équipement de communication radio UE (ici un téléphone mobile). Dans ce cas, l'usager de l'ordinateur fixe T doit, s'il veut joindre l'usager du téléphone mobile UE, utiliser un premier identifiant de communication associé à ce téléphone mobile UE et comportant un préfixe qui désigne l'agent d'interfonctionnement AI.

Par exemple, l'opérateur du premier réseau radio R1 a réservé pour ses clients, auprès d'autorités compétentes, des premiers identifiants de communication de type numéros de téléphone. Ainsi, cet opérateur a par exemple obtenu pour la France tous les numéros de téléphones qui sont compris entre 09 60 10 00 00 et 09 60 10 99 99. L'un de ces numéros, par exemple 09 60 10 00 00, est attribué à l'agent d'interfonctionnement Al. On comprendra que dans cet exemple non limitatif le préfixe commun à tous les numéros attribués à l'opérateur du premier réseau radio R1 est « 09 60 10 ». Par conséquent, chaque fois qu'un équipement de réseau, d'un opérateur qui a passé des accords de coopération avec l'opérateur du premier réseau radio R1, va détecter qu'un appel entrant désigne un premier identifiant de communication comportant le préfixe 09 60 10 il va automatiquement router cet appel vers l'agent d'interfonctionnement AI du premier réseau radio R1. Cette situation est illustrée schématiquement sur les figures 1 et 2.

Plus précisément, dans les exemples des figures 1 et 2, l'ordinateur fixe T, connecté au troisième réseau R3, tente d'établir une communication vocale (VoIP) avec le téléphone mobile UE en utilisant le premier identifiant de communication de ce dernier (UE), par exemple 09 60 10 00 64. Cet appel (entrant) est donc transmis par le troisième réseau R3 à une passerelle de communication (ou « gateway ») GW du second réseau radio R2, qui assure au sein de ce dernier (R2) l'interface avec les autres réseaux R1 et R3. La passerelle de communication GW détecte alors que l'appel entrant désigne un premier identifiant de communication comportant le préfixe 09 60 10, et route cet appel vers l'agent d'interfonctionnement AI du premier réseau radio R1. Ce routage se fait par exemple au moyen d'un message de type SIP INVITE (bien connu de l'homme de l'art) transmis par la passerelle de communication GW à destination de l'agent d'interfonctionnement AI.

Selon l'invention, l'agent d'interfonctionnement AI va alors déterminer le réseau radio R1 ou R2 auquel est connecté le téléphone mobile UE et via lequel il peut être joint par un second identifiant de communication.

Il est important de noter que dans l'exemple non limitatif illustré la passerelle de communication GW fait partie du second réseau radio R2. Mais, elle pourrait faire partie d'un autre réseau de communication, connecté au premier réseau radio R1, ou bien faire partie de ce dernier (R1).

Il est également important de noter que l'agent d'interfonctionnement AI joue le rôle d'un point de terminaison (et non d'un point de relais) pour l'appel entrant. Par conséquent, il n'existe à ce stade qu'une « demi-communication » L1 établie entre l'ordinateur fixe T et l'agent d'interfonctionnement Al.

Si le téléphone mobile UE est connecté au premier réseau radio R1, il est par exemple enregistré dans le module d'enregistrement (ou registrar) ME du serveur SIP ER (ou bien dans un équipement du réseau d'accès radio du premier réseau radio R1). En revanche, si le téléphone mobile UE est connecté au second réseau radio R2, il ne peut pas être enregistré auprès du serveur SIP ER. Par conséquent, lorsque l'agent d'interfonctionnement AI reçoit l'appel entrant il peut par exemple interroger le module d'enregistrement ME du serveur SIP ER afin de déterminer si le téléphone mobile UE concerné par cet appel entrant s'y trouve enregistré (en variante, il pourrait être informé systématiquement de tout changement) d'enregistrement). La colocalisation du module d'enregistrement ME et de l'agent d'interfonctionnement AI dans un même équipement de réseau ER (ici un serveur SIP) est avantageuse car elle permet de limiter le temps nécessaire à l'obtention de l'information d'enregistrement.

Une fois que l'agent d'interfonctionnement AI connaît le réseau radio auquel est connecté le téléphone mobile UE, il convertit son premier identifiant de communication (ici 09 60 10 00 64) en le second identifiant de communication qui lui est associé au sein du réseau radio (R1 ou R2) auquel il est connecté. Cette association est par exemple définie dans une table de correspondance. Par exemple, un second identifiant de communication peut être une adresse Ip au sein du premier réseau radio R1 (ici de type WiMAX) et un identifiant MSISDN au sein du second réseau radio R2 (ici de type GSM). On notera qu'un second identifiant de communication peut être éventuellement identique à un premier identifiant de communication. L'opérateur du second réseau radio R2 a par exemple réservé pour les clients de l'opérateur du premier réseau radio R1 un certain nombre d'identifiants MSISDN permettant de joindre leurs téléphones mobiles respectifs via le second réseau radio R2.

Une fois la conversion faîte, l'agent d'interfonctionnement Al établit une communication avec le téléphone mobile UE via son second identifiant de communication. Il existe alors une seconde « demi-communication » L2 établie entre le téléphone mobile UE et l'agent d'interfonctionnement AI.

Enfin, l'agent d'interfonctionnement AI établit une interconnexion entre les deux demi-communications L1 et L2 afin que les usagers de l'ordinateur fixe T et du téléphone mobile UE puissent communiquer par la voix.

Dans l'exemple de la figure 1, le téléphone mobile UE est enregistré auprès du serveur SIP ER (et plus précisément de son module d'enregistrement ME) et donc connecté au premier réseau radio R1. Par conséquent, la seconde demi-communication L2 se fait via le premier réseau radio R1, et plus précisément via un équipement appelé CSN (« Connectivity Serving Network ») qui est chargé de fournir un accès IP aux téléphones mobiles UE (les messages SIP le traversent de façon transparente). Pour initier l'établissement de cette seconde demi-communication L2, l'agent d'interfonctionnement AI peut par exemple adresser au téléphone mobile UE, via l'équipement CSN, un message de type SIP INVITE auquel il répond par un message de type SIP OK. Ensuite, l'interconnexion se fait par échange de messages de type SIP OK, puis de type SIP ACK entre l'agent d'interfonctionnement AI et la passerelle de communication GW (cette dernière avertissant en outre l'ordinateur fixe T de l'acceptation de son appel par le téléphone mobile UE).

Dans l'exemple de la figure 2, le téléphone mobile UE n'est pas enregistré auprès du serveur SIP ER. Par conséquent, la seconde demi-communication L2 se fait via le second réseau radio R2, et plus précisément via la passerelle de communication GW et un équipement appelé MSC (« Mobile Switching Centre »). Pour initier l'établissement de cette seconde demi-communication L2, l'agent d'interfonctionnement AI peut par exemple adresser à la passerelle de communication GW un message de type SIP INVITE, qui provoque l'émission par la passerelle de communication GW d'un message de type IAM à destination de l'équipement MSC, qui transmet alors au téléphone mobile UE un message de type SETUP. Puis, la passerelle de communication GW et l'agent d'interfonctionnement AI peuvent s'adresser des messages de type SIP OK et de type SIP ACK pour établir l'interconnexion. Enfin, la passerelle de communication GW avertit l'ordinateur fixe T de l'acceptation de son appel par le téléphone mobile UE.

La seconde partie du procédé est mise en oeuvre chaque fois qu'un équipement de communication radio UE (ici un téléphone mobile) veut établir une communication vocale avec un équipement de communication distant T (ici un ordinateur fixe), connecté au troisième réseau R3. Dans ce cas, le téléphone mobile UE commence par établir une première demi-communication L1 avec l'agent d'interfonctionnement Al afin de lui fournir l'identifiant de communication de l'ordinateur fixe distant T. Pour ce faire il utilise le numéro de téléphone (ici 09 60 10 00 00) de l'agent d'interfonctionnement AI.

On comprendra que l'établissement de cette première demi-communication L1 se fait via le premier réseau radio R1 (figure 3) ou via le second réseau radio R2 (figure 4), selon que le téléphone mobile UE est connecté au premier R1 ou second R2 réseau radio.

Dans l'exemple de la figure 3, le téléphone mobile UE est connecté au premier réseau radio R1. Par conséquent, la première demi-communication L1 se fait via le premier réseau radio R1, et plus précisément via l'équipement CSN. Pour établir cette première demi-communication L1, le téléphone mobile UE et l'agent d'interfonctionnement AI peuvent par exemple s'échanger des messages de type SIP INVITE, de type SIP OK et de type SIP ACK, via l'équipement CSN. Ensuite, le téléphone mobile UE fournit l'identifiant de communication de l'ordinateur fixe T à l'agent d'interfonctionnement Al, via l'équipement CSN et par exemple au moyen d'un message de type SIP INFO, afin qu'il puisse créer une seconde demi-communication L2 avec cet ordinateur fixe T (comme on le verra plus loin).

Dans l'exemple de la figure 4, le téléphone mobile UE est connecté au second réseau radio R2. Par conséquent, la première demi-communication L1 se fait via le second réseau radio R2, et plus précisément via l'équipement MSC et la passerelle de communication GW. Pour établir cette première demi-communication L1, le téléphone mobile UE, l'équipement MSC, la passerelle de communication GW et l'agent d'interfonctionnement AI peuvent par exemple s'échanger des messages de type SETUP, puis de type IAM, puis de type SIP INVITE, puis de type SIP TRYING, puis de type SIP RINGING, puis de type ALERTING, puis de type SIP OK, puis de type ANM, puis de type CONNECT, puis de type CONNECT ACK. Ensuite, le téléphone mobile UE transmet à la passerelle de communication GW, via l'équipement MSC et dans le plan d'usager (ou « user plane »), l'identifiant de communication de l'ordinateur fixe T, par exemple selon le format DTMF. La passerelle de communication GW convertit alors l'identifiant DTMF en données RTP (« Real Time Protocol »), compréhensibles par l'agent d'interfonctionnement AI, conformément à la règle RFC 2833, puis il transmet ces données RTP à l'agent d'interfonctionnement AI. Dans une variante, la passerelle de communication GW pourrait transmettre l'identifiant DTMF à l'agent d'interfonctionnement AI dans un message de type SIP INFO, conformément à la règle RFC 2976.

Il est important de noter que l'agent d'interfonctionnement AI joue le rôle d'un point de terminaison (et non d'un point de relais) pour l'appel sortant. Par conséquent, il n'existe à ce stade qu'une première demi-communication L1 établie entre le téléphone mobile UE et l'agent d'interfonctionnement AI.

Ensuite, l'agent d'interfonctionnement AI établit une seconde demi-communication L2 avec l'ordinateur fixe T au moyen de son identifiant de communication et via le second réseau radio R2 (et plus précisément via la passerelle de communication GW) et le troisième réseau R3. Pour établir cette seconde demi-communication L2, l'agent d'interfonctionnement AI et la passerelle de communication GW peuvent par exemple commencer par s'échanger des messages de type SIP INVITE, puis de type SIP TRYING. La passerelle de communication GW tente ensuite d'appeler l'ordinateur fixe T. Si ce dernier lui répond qu'il analyse l'appel, alors la passerelle de communication GW peut par exemple en informer l'agent d'interfonctionnement AI au moyen d'un message de type SIP Session progress. Puis, si l'ordinateur fixe T signale à la passerelle de communication GW qu'il accepte l'appel, la passerelle de communication GW et l'agent d'interfonctionnement Al finalisent l'établissement de la seconde demi-communication L2 en s'échangeant par exemple un message de type SIP OK.

Enfin, l'agent d'interfonctionnement AI établit une interconnexion entre les première L1 et seconde L2 demi-communications, de sorte que les usagers des ordinateur fixe T et téléphone mobile UE puissent communiquer par la voix. Pour procéder à cette interconnexion, l'agent d'interfonctionnement AI et la passerelle de communication GW peuvent par exemple s'échanger des messages de type SIP re-INVITE, puis de type SIP TRYING, puis de type SIP OK, puis de type SIP ACK (reinvite), puis de type SIP ACK (invite).

L'invention peut également permettre d'assurer une continuité de session de voix lorsqu'un téléphone mobile UE impliqué dans une telle session est contraint de changer de réseau radio du fait qu'il s'est déplacé ou que les conditions radio ont évolué localement et donc lui interdisent de poursuivre sa session sur son réseau radio de connexion. Il est rappelé que ce type de changement de réseau radio est appelé transfert inter-réseaux (ou « handover »).

Dans ce cas, deux cas doivent être envisagés selon que la session de voix impliquant le téléphone mobile UE se fait via le premier réseau radio R1 (figure 5) ou le second réseau radio R2 (figure 6).

Dans l'exemple illustré sur la figure 5, le téléphone mobile UE et l'ordinateur fixe T ont établi une communication de voix (sur IP) via le premier réseau radio R1 (liaisons L1 et L2), et le téléphone mobile UE se déplace (flèche F). A un certain instant, le téléphone mobile UE s'aperçoit qu'un transfert de sa communication va devoir se faire vers le second réseau radio R2. Selon l'invention, le téléphone mobile UE demande alors l'établissement d'une communication avec l'agent d'interfonctionnement AI via le second réseau radio R2, en adressant à l'équipement MSC le numéro de téléphone (ici 09 60 10 00 00) de l'agent d'interfonctionnement AI, par exemple au moyen d'un message de type SETUP. L'équipement MSC transmet alors ce numéro à la passerelle de communication GW par exemple au moyen d'un message de type IAM. La passerelle de communication GW détecte alors que l'appel entrant désigne un premier identifiant de communication comportant le préfixe 09 60 10, et route cet appel vers l'agent d'interfonctionnement AI du premier réseau radio R1. Ce routage se fait par exemple au moyen d'un message de type SIP INVITE transmis par la passerelle de communication GW à destination de l'agent d'interfonctionnement AI.

Lorsque l'agent d'interfonctionnement AI reçoit l'appel routé, il s'aperçoit qu'il est issu d'un téléphone mobile UE qui est déjà en session de voix (sur IP) avec un ordinateur fixe T via le premier réseau radio R1. Il interprète donc cet appel comme une demande de transfert de réseau radio, et pour y satisfaire il met à jour l'interconnexion entre le téléphone mobile UE et l'ordinateur fixe T via le second réseau radio R2 et supprime la (portion de) demi-communication L2 utilisée jusqu'alors dans le premier réseau radio R1.

Plus précisément, l'agent d'interfonctionnement AI commence par accepter l'appel issu du téléphone mobile UE, ce qui entraîne l'établissement d'une troisième demi-communication L4 avec le téléphone mobile UE, via la passerelle de communication GW et l'équipement MSC. Puis, une fois cette troisième demi-communication L4 établie, il met à jour, par exemple au moyen d'un message de type SIP re-INVITE, la première demi-communication L1 (de la session en cours) de façon à l'interconnecter avec la troisième demi-communication L4 établie via le second réseau radio R2, et supprime la seconde demi-communication L2 devenue inutile.

Dans l'exemple illustré sur la figure 6, le téléphone mobile UE et l'ordinateur fixe T ont établi une communication de voix sur circuits via le second réseau radio R2 (liaisons L1 et L2), et le téléphone mobile UE se déplace (flèche F). A un certain instant, le téléphone mobile UE s'aperçoit qu'un transfert de sa communication va devoir se faire vers le premier réseau radio R1. Selon l'invention, le téléphone mobile UE demande alors l'établissement d'une communication avec l'agent d'interfonctionnement AI via le premier réseau radio R1, en adressant au serveur SIP ER, via l'équipement CSN, le numéro de téléphone (ici 09 60 10 00 00) de l'agent d'interfonctionnement Al, par exemple au moyen d'un message d'appel de type SIP INVITE.

Lorsque l'agent d'interfonctionnement AI reçoit le message d'appel, il s'aperçoit qu'il est issu d'un téléphone mobile UE qui est déjà en session de voix (sur circuits) avec un ordinateur fixe T via le second réseau radio R2. Il interprète donc cet appel comme une demande de transfert de réseau radio, et pour y satisfaire il met à jour l'interconnexion entre le téléphone mobile UE et l'ordinateur fixe T via le premier réseau radio R1 et supprime la (portion de) demi-communication L2 utilisée jusqu'alors dans le second réseau radio R2.

Plus précisément, l'agent d'interfonctionnement AI commence par accepter l'appel issu du téléphone mobile UE, ce qui entraîne l'établissement d'une troisième demi-communication L4 avec le téléphone mobile UE, via l'équipement CSN. Puis, une fois cette troisième demi-communication L4 établie, il met à jour, par exemple au moyen d'un message de type SIP re-INVITE, la première demi-communication L1 (de la session en cours) de façon à l'interconnecter avec la troisième demi-communication L4 établie via le premier réseau radio R1, et supprime la seconde demi-communication L2 devenue inutile.

L'invention ne se limite pas aux modes de réalisation d'agent d'interfonctionnement, d'équipement de réseau et de procédé de contrôle décrits ci-avant, seulement à titre d'exemple, mais elle englobe toutes les variantes que pourra envisager l'homme de l'art dans le cadre des revendications ci-après.

## Revendications

1. Procédé de contrôle de communications vocales concernant un équipement de communication radio (UE) propre à se connecter au moins à un premier réseau radio (R1) disposant d'un coeur supportant un protocole Internet et à un second réseau radio (R2) disposant d'un coeur à commutation de circuits, **caractérisé en ce qu'**il consiste · i) lorsqu'un équipement de communication distant (T) veut établir une communication vocale avec ledit équipement de communication radio (UE), à utiliser un premier identifiant de communication associé à ce dernier (UE) et comportant un préfixe désignant un agent d'interfonctionnement (AI) implanté dans ledit premier réseau radio (R1), puis à déterminer avec ledit agent d'interfonctionnement (AI) le réseau radio (R1, R2) auquel est connecté ledit équipement de communication radio (UE) et via lequel il peut être joint par un second identifiant de communication, afin d'établir une communication avec lui (UE) via son second identifiant de communication, puis d'établir une interconnexion entre lesdits équipement de communication distant (T) et équipement de communication radio (UE), et ii) lorsque ledit équipement de communication radio (UE) veut établir une communication vocale avec un équipement de communication distant (T), à établir une communication avec ledit agent d'interfonctionnement (AI) afin de lui fournir un identifiant de communication dudit équipement de communication distant (T) pour qu'il établisse une communication avec lui (T) via son identifiant de communication puis qu'il établisse une interconnexion entre lesdits équipement de communication radio (UE) et équipement de communication distant (T).

2. Procédé selon la revendication 1, **caractérisé en ce qu'**en cas de déplacement dudit équipement de communication radio (UE), pendant une communication vocale avec ledit équipement de communication distant (T) via ledit premier réseau radio (R1), nécessitant un transfert vers ledit second réseau radio (R2), ledit équipement de communication radio (UE) établit une communication avec ledit agent d'interfonctionnement (AI) via ledit second réseau radio (R2), afin qu'il mette à jour ladite interconnexion entre lesdits équipement de communication radio (UE) et équipement de communication distant (T) via ledit second réseau radio (R2) et qu'il supprime la portion de communication via ledit premier réseau radio (R1).

3. Procédé selon l'une des revendications 1 et 2, **caractérisé en ce qu'**en cas de déplacement dudit équipement de communication radio (UE), pendant une communication vocale avec ledit équipement de communication distant (T) via ledit second réseau radio (R2), nécessitant un transfert vers ledit premier réseau radio (R1), ledit équipement de communication radio (UE) établit une communication avec ledit agent d'interfonctionnement (AI) via ledit premier réseau radio (R1), afin qu'il mette à jour ladite interconnexion entre lesdits équipement de communication radio (UE) et équipement de communication distant (T) via ledit premier réseau radio (R1) et qu'il supprime la portion de communication via ledit second réseau radio (R2).

4. Dispositif Agent d'interfonctionnement (AI) pour un premier réseau radio disposant d'un coeur supportant un protocole Internet (R1) et auquel peuvent se connecter des équipements de communication radio (UE) pouvant également se connecter à au moins un second réseau radio (R2) disposant d'un coeur à commutation de circuits, **caractérisé en ce qu'**il est agencé i) lorsqu'il reçoit d'un équipement de communication distant (T) une demande d'établissement de communication vocale avec un équipement de communication radio (UE) désigné par un premier identifiant de communication comportant un préfixe désignant également ledit dispositif agent d'interfonctionnement (AI), pour déterminer le réseau radio (R1, R2) auquel est connecté ledit équipement de communication radio (UE) et via lequel il peut être joint par un second identifiant de communication, puis pour établir une communication avec cet équipement de communication radio (UE) via son second identifiant de communication, et pour établir une interconnexion entre lesdits équipement de communication distant (T) et équipement de communication radio (UE), et ii) lorsqu'il reçoit d'un équipement de communication radio (UE) une demande d'établissement de communication vocale comportant un identifiant de communication désignant un équipement de communication distant (T) avec lequel ledit équipement de communication radio (UE) veut établir une communication vocale, pour établir une communication avec ledit équipement de communication distant (T) via son identifiant de communication, puis pour établir une interconnexion entre lesdits équipement de communication radio (UE) et équipement de communication distant (T).

5. Dispositif Agent d'interfonctionnement selon la revendication 4, **caractérisé en ce qu'**il est agencé, en cas de réception en provenance dudit équipement de communication radio (UE) d'une autre demande d'établissement de communication via ledit second réseau radio (R2) alors que ledit équipement de communication radio (UE) est déjà en communication vocale avec ledit équipement de communication distant (T) via ledit premier réseau radio (R1), pour interpréter cette autre demande comme une demande de transfert vers ledit second réseau radio (R2), puis pour mettre à jour ladite interconnexion entre lesdits équipement de communication radio (UE) et équipement de communication distant (T) via ledit second réseau radio (R2), et pour supprimer la portion de communication via ledit premier réseau radio (R1).

6. Dispositif Agent d'interfonctionnement selon l'une des revendications 4 et 5, **caractérisé en ce qu'**il est agencé, en cas de réception en provenance dudit équipement de communication radio (UE) d'une autre demande d'établissement de communication via ledit premier réseau radio (R1) alors que ledit équipement de communication radio (UE) est déjà en communication vocale avec ledit équipement de communication distant (T) via ledit second réseau radio (R2), pour interpréter cette autre demande comme une demande de transfert vers ledit premier réseau radio (R1), puis pour mettre à jour ladite interconnexion entre lesdits équipement de communication radio (UE) et équipement de communication distant (T) via ledit premier réseau radio (R1), et pour supprimer la portion de communication via ledit second réseau radio (R2).

7. Equipement de réseau (ER) pour un réseau radio à protocole Internet (R1), **caractérisé en ce qu'**il comprend un dispositif agent d'interfonctionnement (AI) selon l'une des revendications 4 à 6.

8. Equipement de réseau selon la revendication 7, **caractérisé en ce qu'**il constitue un serveur de type SIP.

9. Utilisation du procédé selon l'une des revendications 1 à 3, de l'agent d'interfonctionnement (AI) selon l'une des revendications 4 à 6, et de l'équipement de réseau (ER) selon l'une des revendications 7 et 8, en présence d'un premier réseau radio (R1) disposant d'un coeur supportant un protocole Internet et choisi dans un groupe comprenant au moins des réseaux de types WiMAX, HSPA, LTE et WLAN, et d'un second réseau radio (R2) disposant d'un coeur à commutation de circuits et choisi dans un groupe comprenant au moins un réseau mobile de type GSM, un réseau mobile de type UMTS, un réseau mobile de type HSPA, un réseau mobile de type CDMA 2000 et un réseau mobile de type LTE.

## Patentansprüche

1. Verfahren zur Steuerung von Sprachkommunikationen in Bezug auf ein Funkkommunikationsendgerät (UE), welches für die Verbindung mit mindestens einem ersten Funknetzwerk (R1), dessen Kern ein Internetprotokoll unterstützt, und einem zweiten Funknetzwerk (R2), welches über einen leitungsvermittelnden Kern verfügt, ausgelegt ist, **dadurch gekennzeichnet, dass** es darin besteht, i) wenn ein entferntes Kommunikationsgerät (T) eine Sprachkommunikation mit dem besagten Funkkommunikationsgerät (UE) aufbauen möchte, eine mit diesem (UE) assoziierte erste Kommunikationskennung zu verwenden, deren Präfix einen in dem besagten ersten Funknetzwerk (R1) eingerichteten Verknüpfungsagenten (AI) bezeichnet, und anschließend mit dem besagten Verknüpfungsagenten (AI) das Funknetzwerk (R1, R2), an welches das besagte Funkkommunikationsendgerät (UE) angebunden ist und über welches es anhand einer zweiten Kommunikationskennung erreicht werden kann, zu ermitteln, um über seine zweite Kommunikationskennung eine Kommunikation mit ihm (UE) aufzubauen und danach eine Kreuzverbindung zwischen dem besagten entfernten Kommunikationsgerät (T) und dem Funkkommunikationsendgerät (UE) aufzubauen, und ii) wenn das besagte Funkkommunikationsendgerät (UE) eine Sprachkommunikation mit einem entfernten Kommunikationsgerät (T) aufbauen möchte, eine Kommunikation mit dem besagten Verknüpfungsagenten (AI) aufzubauen, um ihm eine Kommunikationskennung des besagten entfernten Kommunikationsgerät (T) zu übermitteln, damit er über dessen Kommunikationskennung eine Kommunikation mit diesem (T) aufbaut und anschließend eine Kreuzverbindung zwischen dem besagten Funkkommunikationsendgerät (UE) und dem besagten entfernten Kommunikationsgerät (T) aufbaut.

2. Verfahren nach Anspruch 1, **dadurch gekennzeichnet, dass** das besagte Funkkommunikationsendgerät (UE) im Fall eines Standortwechsels des besagten Funkkommunikationsendgerätes (UE) während einer Sprachkommunikation mit dem besagten entfernten Kommunikationsgerät (T) über das besagte erste Funknetzwerk (R1), welcher eine Übergabe an das besagte zweite Funknetzwerk (R2) erfordert, eine Kommunikation mit dem besagten Verknüpfungsagenten (AI) über das besagte zweite Funknetzwerk (R2) aufbaut, damit er die besagte Kreuzverbindung zwischen dem besagten Funkkommunikationsendgerät (UE) und dem besagten entfernten Kommunikationsgerät (T) über das besagte zweite Funknetzwerk (R2) aktualisiert und den Kommunikationsabschnitt über das besagte erste Funknetzwerk (R1) abbricht.

3. Verfahren nach einem der Ansprüche 1 und 2, **dadurch gekennzeichnet, dass** das besagte Funkkommunikationsendgerät (UE) im Fall eines Standortwechsels des besagten Funkkommunikationsendgerätes (UE) während einer Sprachkommunikation mit dem besagten entfernten Kommunikationsgerät (T) über das besagte erste Funknetzwerk (R1), welcher eine Übergabe an das besagte zweite Funknetzwerk (R2) erfordert, eine Kommunikation mit dem besagten Verknüpfungsagenten (AI) über das besagte erste Funknetzwerk (R1) aufbaut, damit er die besagte Kreuzverbindung zwischen dem besagten Funkkommunikationsendgerät (UE) und dem besagten entfernten Kommunikationsgerät (T) über das besagte erste Funknetzwerk (R1) aktualisiert und den Kommunikationsabschnitt über das besagte zweite Funknetzwerk (R2) abbricht.

4. Verknüpfungsagent-Vorrichtung (AI) für ein erstes Funknetzwerk, dessen Kern ein Internetprotokoll unterstützt (R1) und an welches sich Funkkommunikationsendgeräte (UE) anbinden können, die sich ebenfalls an mindestens ein zweites Funknetzwerk (R2), welches über einen leitungsvermittelnden Kern verfügt, anbinden können, **dadurch gekennzeichnet, dass** sie dazu ausgelegt ist, i) wenn sie von einem entfernten Kommunikationsgerät (T) eine Anforderung für den Aufbau einer Sprachkommunikation mit einem anhand einer ersten Kommunikationskennung, welche ein Präfix enthält, welches ebenfalls die besagte Verknüpfungsagent-Vorrichtung (AI) kennzeichnet, gekennzeichneten Funkkommunikationsendgerät (UE) empfängt, das Funknetzwerk (R1, R2), an welches das besagte Funkkommunikationsendgerät (UE) angebunden ist und über welches es anhand einer zweiten Kommunikationskennung erreicht werden kann, zu ermitteln und anschließend über dessen zweite Kommunikationskennung eine Kommunikation mit diesem Funkkommunikationsendgerät (UE) aufzubauen und eine Kreuzverbindung zwischen dem besagten entfernten Kommunikationsgerät (T) und dem Funkkommunikationsendgerät (UE) aufzubauen, und ii) wenn es von einem Funkkommunikationsendgerät (UE) eine Anforderung für den Aufbau einer Sprachkommunikation mit einer Kommunikationskennung, welche ein entferntes Kommunikationsgerät (T), mit dem das besagte Funkkommunikationsendgerät (UE) eine Sprachkommunikation aufbauen möchte, kennzeichnet, empfängt, über dessen Kommunikationskennung eine Kommunikation mit dem besagten entfernten Kommunikationsgerät aufzubauen und anschließend eine Kreuzverbindung zwischen dem besagten Funkkommunikationsendgerät (UE) und dem entfernten Kommunikationsgerät (T) aufzubauen.

5. Verknüpfungsagent-Vorrichtung nach Anspruch 4, **dadurch gekennzeichnet, dass** sie dazu ausgelegt ist, im Fall des Empfangs, von dem besagten Funkkommunikationsendgerät (UE), einer anderen Anforderung für den Aufbau einer Kommunikation über das besagte zweite Funknetzwerk (R2), während das besagte Funkkommunikationsendgerät (UE) bereits über das besagte erste Funknetzwerk (R1) mit dem besagten entfernten Kommunikationsgerät (T) in Sprachkommunikation steht, diese andere Anforderung als eine Anforderung für die Übergabe an das besagte zweite Funknetzwerk (R2) zu interpretieren und anschließend die besagte Kreuzverbindung zwischen dem besagten Funkkommunikationsendgerät (UE) und dem besagten entfernten Kommunikationsgerät (T) über das besagte zweite Funknetzwerk (R2) zu aktualisieren und den Kommunikationsabschnitt über das besagte erste Funknetzwerk (R1) abzubrechen.

6. Verknüpfungsagent-Vorrichtung nach einem der Ansprüche 4 und 5, **dadurch gekennzeichnet, dass** sie dazu ausgelegt ist, im Fall des Empfangs, von dem besagten Funkkommunikationsendgerät (UE), einer anderen Anforderung für den Aufbau einer Kommunikation über das besagte erste Funknetzwerk (R1), während das besagte Funkkommunikationsendgerät (UE) bereits über das besagte zweite Funknetzwerk (R2) mit dem besagten entfernten Kommunikationsgerät (T) in Sprachkommunikation steht, diese andere Anforderung als eine Anforderung für die Übergabe an das besagte erste Funknetzwerk (R1) zu interpretieren und anschließend die besagte Kreuzverbindung zwischen dem besagten Funkkommunikationsendgerät (UE) und dem besagten entfernten Kommunikationsgerät (T) über das besagte erste Funknetzwerk (R1) zu aktualisieren und den Kommunikationsabschnitt über das besagte zweite Funknetzwerk (R2) abzubauen.

7. Netzwerkeinrichtung (ER) für ein Funknetzwerk mit Internetprotokoll (R1), **dadurch gekennzeichnet, dass** sie eine Verknüpfungsagent-Vorrichtung (AI) gemäß einem der Ansprüche 4 bis 6 umfasst.

8. Netzwerkeinrichtung nach Anspruch 7, **dadurch gekennzeichnet, dass** sie einen Server vom Typ SIP bildet.

9. Anwendung eines Verfahrens gemäß einem der Ansprüche 1 bis 3 des Verknüpfungsagenten (A1) gemäß einem der Ansprüche 4 bis 6, und der Netzwerkeinrichtung (ER) gemäß einem der Ansprüche 7 und 8, bei Vorhandensein eines ersten Funknetzwerks (R1), welches über einen Kern verfügt, der ein Internetprotokoll unterstützt und in einer Gruppe zumindest bestehend aus Netzwerken vom Typ WiMAX, HSPA, LTE und WLAN gewählt wird, und eines zweiten Funknetzwerks (R2), welches über einen leitungsvermittelnden Kern verfügt und in einer Gruppe zumindest bestehend aus einem Mobilfunknetz vom Typ GSM, einem Mobilfunknetz vom Typ UMTS, einem Mobilfunknetz vom Typ HSPA, einem Mobilfunknetz vom Typ CDMA 2000 und einem Mobilfunknetz vom Typ LTE gewählt wird.

## Claims

1. A method of controlling voice communications concerning a radio communication device (UE) capable of connecting at least to a first radio network (R1) having a core supporting an Internet protocol and a second radio network (R2) having a circuit-switched core, **characterized in that** it consists i) whenever a remote communication device (T) wants to establish voice communication with said radio communication device (UE), of using a first communication identifier associated with that device (UE) and comprising a prefix designating an interworking agent (AI) installed in said first radio network (R1), then of determining with said interworking agent (A1) the radio network (R1, R2) to which said radio communication device (UE) is connected and via which it can be contacted by a second communication identifier, in order to establish communication with it (UE) via its second communication identifier, then to establish an interconnection between said remote communication device (T) and radio communication device (UE), and ii) when said radio communication device (UE) wants to establish a voice communication with a remote communication device (T), of establishing a communication with said interworking agent (AI) in order to provide it with a communication identifier of said remote communication device (T) so that it can establish a communication with it (T) via its communication identifier and then establish an interconnection between said radio communication device (UE) and remote communication device (T).

2. A method according to claim 1, **characterized in that** in the event that said radio communication device (UE) moves, during a voice communication with said remote communication device (T) via said first radio network (R1), requiring a transfer to said second radio network (R2), said radio communication device (UE) establishes a communication with said interworking agent (AI) via said second radio network (R2), so that it can update the city interconnection between said radio communication device (UE) and remote communication device (T) via said second radio network (R2) and delete the communication portion via said first radio network (R1).

3. A method according to claims 1 and 2, **characterized in that** in the event that said radio communication device (UE) moves, during a voice communication with said remote communication device (T) via said second radio network (R2), requiring a transfer to said first radio network (R1), said radio communication device (UE) establishes a communication with said interworking agent (AI) via said first radio network (R1), so that it can update said interconnection between said radio communication device (UE) and remote communication device (T) via said first radio network (R1) and delete the communication portion via said second radio network (R2).

4. An interworking agent device (AI) for a first radio network having a core supporting an Internet protocol (R1) and to which radio communication devices (UE) can connect which can also connect to at least one second radio network (R2) having a circuit-switched core, **characterized in that** it is operative i) when it receives from a remote communication device (T) a request to establish voice communication with a radio communication device (UE) designated by a first communication identifier comprising a prefix also designating said interworking agent device (AI), to determine a radio network (R1, R2) to which said radio communication device is connected (UE) and via which it can be contacted by a second communication identifier, then to establish a communication with that radio communication device (UE) via its second communication identifier, and to establish an interconnection between said remote communication device (T) and radio communication device (UE), and ii) when it receives from a radio communication device (UE) a request to establish a voice communication comprising a communication identifier designating a remote communication device (T) with which said radio communication device (UE) wants to establish a voice communication, to establish a communication with said remote communication device (T) via its communication identifier, then to establish an interconnection between said radio communication device (UE) and remote communication device (T).

5. An interworking agent device according to claim 4, **characterized in that** it is operative, in the event that it receives from said radio communication device (UE) another request to establish communication via said second radio network (R2) while said radio communication device (UE) is already in voice communication with said remote communication device (T) via said first radio network (R1), to interpret that other request as a request to transfer to said second radio network (R2), then to update said interconnection between said radio communication device (UE) and remote communication device (T) via said second radio network (R2), and to delete the communication portion via said first radio network (R1).

6. An interworking agent device according to any one of the claims 4 and 5, **characterized in that** it is arranged, in the event that it receives from said radio communication device (UE) another request to establish communication via said first radio network (R1) while said radio communication device (UE) is already in voice communication with said remote communication device (T) via said second radio network (R2), to interpret that other request as a request to transfer to said first radio network (R1), then to update said interconnection between said radio communication device (UE) and remote communication device (T) via said first radio network (R1), and to delete the communication portion via said second radio network (R2).

7. A network device (ER) for an Internet protocol radio network (R1), **characterized in that** it comprises an interworking agent device (AI) according to one of the claims 4 to 6.

8. A network device 7, **characterized in that** it constitutes a SIP server.

9. Use of the method according to one of the claims 1 to 3, of the interworking agent (AI) according to one of the claims 4 to 6, and the network device (ER) according to one of the claims 7 and 8, in the presence of a first radio network (R1) having a core supporting an Internet protocol and chosen from a group comprising at least one of the networks WiMAX, HSPA, LTE and WLAN, and a second radio network (R2) having a circuit-switched core and chosen from a group comprising at least one GSM mobile network, a UMTS mobile network, an HSPA mobile network, a CDMA 2000 mobile network and an LTE mobile network.
